# EUROPÄISCHE PATENTSCHRIFT

(11) **EP 3 661 819 B1**
(45) Veröffentlichungstag und Bekanntmachung des Hinweises auf die Patenterteilung: **20.03.2024**
(21) Anmeldenummer: 18742995.6
(22) Anmeldetag: 16.07.2018
(51) Int. Cl.: B60W 10/18, B60W 10/20, B60W 50/04, B60W 50/029, B60T 8/88

(54) **KONTROLLSYSTEM FÜR EIN KRAFTFAHRZEUG, KRAFTFAHRZEUG, VERFAHREN ZUR KONTROLLE EINES KRAFTFAHRZEUGS, COMPUTERPROGRAMMPRODUKT UND COMPUTERLESBARES MEDIUM**
CONTROL SYSTEM FOR A MOTOR VEHICLE, MOTOR VEHICLE, METHOD FOR CONTROLLING A MOTOR VEHICLE, COMPUTER PROGRAM PRODUCT, AND COMPUTER-READABLE MEDIUM
SYSTÈME DE COMMANDE POUR VÉHICULE AUTOMOBILE, VÉHICULE AUTOMOBILE, PROCÉDÉ DE COMMANDE D'UN VÉHICULE AUTOMOBILE, PRODUIT PROGRAMME INFORMATIQUE ET SUPPORT LISIBLE PAR ORDINATEUR

(30) Priorität: 31.07.2017 DE 102017117297
(43) Veröffentlichungstag der Anmeldung: 10.06.2020
(73) Patentinhaber: HELLA GmbH & Co. KGaA, 59552 Lippstadt (DE)
(72) Erfinder: ORLOV, Sergey, 33104 Paderborn (DE); KÜGELER,Carsten, 59557 Lippstadt (DE); KÖHLER, Ulrich, 59556 Lippstadt (DE); GRABS, Peter, 97084 Würzburg (DE); KORTE, Matthias, 97084 Würzburg (DE)
(86) Internationale Anmeldenummer: PCT/EP2018/069240
(87) Internationale Veröffentlichungsnummer: WO 2019/025173

(56) Entgegenhaltungen:
- WO-A1-2011/032586
- WO-A1-2014/138767
- WO-A1-2017/058707
- DE-A1-102014 200 071
- DE-A1-102014 213 171
- US-A1- 2015 012 166

## Beschreibung

Die vorliegende Erfindung bezieht sich auf ein Kontrollsystem für ein Kraftfahrzeug nach dem Oberbegriff des Anspruchs 1, ein Kraftfahrzeug nach dem Oberbegriff des Anspruchs 3, ein Verfahren zur Kontrolle eines Kraftfahrzeugs nach dem Oberbegriff des Anspruchs 4, ein Computerprogrammprodukt und ein computerlesbares Medium.

Derartige Kontrollsysteme für Kraftfahrzeuge, Kraftfahrzeuge, Verfahren zur Kontrolle von Kraftfahrzeugen, Computerprogrammprodukte und computerlesbares Medien sind aus dem Stand der Technik in zahlreichen Ausführungsvarianten bereits bekannt.

Beispielsweise ist aus der Maschinenübersetzung der FR 2 843 341 B1 ins Englische ein Kontrollsystem für ein Kraftfahrzeug bekannt, umfassend ein erstes als Bremssteuergerät ausgebildetes Steuergerät zur Kontrolle einer als Bremsfunktion ausgebildeten ersten Funktion des Kraftfahrzeugs, ein zweites als Lenksteuergerät ausgebildetes Steuergerät zur Kontrolle einer als Lenkfunktion ausgebildeten zweiten Funktion des Kraftfahrzeugs und ein als Zentralsteuergerät ausgebildetes Reservesteuergerät, wobei das Bremssteuergerät und das Lenksteuergerät jeweils mit mindestens einem Sensor und/oder mindestens einem Aktor signalübertragend verbunden sind und wobei das Bremssteuergerät mit dem Zentralsteuergerät signalübertragend verbunden ist. Im Fehlerfall des Bremssteuergeräts wird eine Notbremsung von dem Zentralsteuergerät eingeleitet und kontrolliert.

Aus der DE 10 2014 200 071 A1 ist ferner ein Kraftfahrzeug mit einer ersten Steuer- und Regeleinheit bekannt, wobei das Kraftfahrzeug bevorzugt eine autonome Fahrfunktion aufweist, wobei die Funktion zur Realisierung autonomen Fahrens in eine zweite Steuer- und Regeleinheit integriert ist. Zumindest ein Teil der Funktionen zur Realisierung autonomen Fahrens sind bevorzugt zusätzlich in die erste Steuer- und Regeleinheit integriert, um im Falle eines Fehlers in der zweiten Steuer- und Regeleinheit zumindest Grundfunktionen des autonomen Fahrens zumindest zeitweise aufrecht erhalten zu können.

Darüber hinaus ist aus der WO 2017 058 707 A1 ein System für ein Kraftfahrzeug bekannt, bei dem das CAN Layout mit einer Redundanz versehen ist. Diese Redundanz sieht vor, dass für den Fall, wenn bestimmte Module, beispielsweise ECU's, stromlos werden oder deren Signalübertragungsverbindung zu den diesen Modulen zugeordneten Aktoren verlieren, andere Module, beispielsweise andere ECU's, mit diesen Aktoren in Verbindung bleiben und wichtige Funktionen, wie die Bremsfunktion oder die Lenkfunktion, aufrecht erhalten.

Schließlich ist aus der WO 2011 032 586 A1 ein Verfahren für ein Kraftfahrzeug bekannt, bei dem die Komponenten des Kraftfahrzeugs redundant und simultan betrieben werden. Bei einem Ausfall der einen Komponente wird deren Funktion durch die entsprechend zugehörige redundante Komponente vollständig übernommen. Die Überwachung eines Ausfalls einer Komponente kann dabei durch eine zusätzliche Überwachungs-Steuereinheit erfolgen.

Hier setzt die vorliegende Erfindung an.

Der vorliegenden Erfindung liegt die Aufgabe zugrunde, die ordnungsgemäße Ausführung von mittels Steuergeräten kontrollierter Funktionen eines Kraftfahrzeugs auch bei einem fehlerhaften Steuergerät bei möglichst geringem Zusatzaufwand zu gewährleisten.

Diese Aufgabe wird durch ein Kontrollsystem mit den Merkmalen des Anspruchs 1, ein Kraftfahrzeug mit den Merkmalen des Anspruchs 3, ein Verfahren mit den Merkmalen des Anspruchs 4, ein Computerprogrammprodukt mit den Merkmalen des Anspruchs 7 und ein computerlesbares Medium mit den Merkmalen des Anspruchs 8 gelöst. Die Unteransprüche betreffen vorteilhafte Weiterbildungen der Erfindung.

Ein wesentlicher Vorteil der Erfindung liegt insbesondere darin, dass voneinander verschiedene und mittels Steuergeräten kontrollierte Funktionen eines Kraftfahrzeugs auch im Fehlerfall eines der Steuergeräte mit einem möglichst geringen Mehraufwand sicher weiter ausgeführt werden. Dabei werden mindestens zwei voneinander verschiedene und jeweils durch ein Steuergerät kontrollierte Funktionen des Kraftfahrzeugs im Fehlerfall eines der beiden Steuergeräte weiter ausgeführt, ohne dass für beide Steuergeräte jeweils ein Reservesteuergerät vorgehalten werden müsste. Entsprechend ist es möglich, Bauraum und Gewicht einzusparen sowie die Kosten zu reduzieren. Gerade bei modernen Kraftfahrzeugen mit einem hohen Grad an elektrisch und elektronisch ausgebildeter Funktionalität, also einer Vielzahl von mittels Steuergeräten kontrollierten Funktionen, ist dies sehr wichtig.

Die Formulierungen gemäß der Kennzeichen der Ansprüche 1 und 4, wonach das erste und das zweite Steuergerät miteinander oder jeweils mit dem dritten Steuergerät signalübertragend verbunden sind, sind allgemein auszulegen. Anstelle direkter signalübertragender Verbindungen sind auch indirekte signalübertragende Verbindungen denkbar.

Beispielsweise wäre unter einer indirekten signalübertragenden Verbindung auch zu verstehen, dass das erste und/oder zweite Steuergerät im jeweiligen Fehlerfall eine Fehlermeldung mittels einer signalübertragenden Verbindung an ein übergeordnetes Steuergerät weiterleitet und das übergeordnete Steuergerät dann ein entsprechendes Ausgangssignal erzeugt und dieses an das fehlerfreie Steuergerät oder das dritte Steuergerät übermittelt. Somit führt das Ausgangssignal des übergeordneten Steuergeräts zu einer Konfiguration des fehlerfreien Steuergeräts derart, dass mittels des fehlerfreien Steuergeräts die zu dem fehlerhaften Steuergerät korrespondierende Funktion des Kraftfahrzeugs kontrollierbar ist. Entsprechendes gilt für das erfindungsgemäße Verfahren, wonach das fehlerfreie Steuergerät in Abhängigkeit des Ausgangssignals des übergeordneten Steuergeräts die zu dem fehlerhaften Steuergerät korrespondierende Funktion des Kraftfahrzeugs kontrolliert. Bei dem übergeordneten Steuergerät kann es sich beispielsweise um ein Zentralsteuergerät handeln.

Der Begriff "Steuergerät" ist erfindungsgemäß allgemein zu verstehen und bezeichnet jede Art eines elektrischen oder elektronischen Geräts zur automatischen Kontrolle einer Funktion eines Kraftfahrzeugs.

Erfindungsgemäß ist es somit vorgesehen, dass das Kontrollsystem eine Bedienungsschnittstelle aufweist und in Abhängigkeit des Anliegens eines Aktivierungssignals an der Bedienungsschnittstelle von einem Deaktivierungszustand in einen Aktivierungszustand überführbar ist, wobei das fehlerfreie Steuergerät in dem Deaktivierungszustand des Kontrollsystems die zu dem fehlerhaften Steuergerät korrespondierende Funktion des Kraftfahrzeugs unabhängig von dem Eingang des Fehlersignals bei dem fehlerfreien Steuergerät oder dem dritten Steuergerät nicht kontrolliert und in dem Aktivierungszustand des Kontrollsystems die zu dem fehlerhaften Steuergerät korrespondierende Funktion des Kraftfahrzeugs in Abhängigkeit von dem Eingang des Fehlersignals bei dem fehlerfreien Steuergerät oder dem dritten Steuergerät kontrolliert. Hierdurch ist es möglich, Kraftfahrzeuge mit dem erfindungsgemäßen Kontrollsystem bereits zu einem Zeitpunkt auszustatten, zu dem beispielsweise autonome Kraftfahrzeuge und damit einhergehende Funktionalitäten gesetzlich noch nicht zulässig sind. Bei einer späteren Gesetzesänderung ist dann eine Umstellung auf einen autonomen Fahrbetrieb des Kraftfahrzeugs und damit auf ein erfindungsgemäßes Kontrollsystem in dessen Aktivierungszustand mit geringem Aufwand möglich.

Dies ist von Vorteil, wenn es in verschiedenen Staaten voneinander abweichende Gesetzeslagen gibt; beispielsweise in Hinblick auf die Zulässigkeit von autonomen Kraftfahrzeugen. Gemäß der vorgenannten Weiterbildung ist es möglich, trotz abweichender gesetzlicher Bestimmungen in einzelnen Staaten ein bezüglich der erfindungsrelevanten Komponenten einheitliches Kraftfahrzeugmodell zu entwickeln, herzustellen und zu vertreiben.

Gleiches gilt für das erfindungsgemäße Verfahren zur Kontrolle eine Kraftfahrzeugs, wonach das Kontrollsystem eine Bedienungsschnittstelle aufweist und in Abhängigkeit des Anliegens eines Aktivierungssignals an der Bedienungsschnittstelle von einem Deaktivierungszustand in einen Aktivierungszustand überführt wird, wobei das fehlerfreie Steuergerät in dem Deaktivierungszustand des Kontrollsystems die zu dem fehlerhaften Steuergerät korrespondierende Funktion des Kraftfahrzeugs unabhängig von dem Eingang des Fehlersignals bei dem fehlerfreien Steuergerät oder dem dritten Steuergerät nicht kontrolliert und in dem Aktivierungszustand des Kontrollsystems die zu dem fehlerhaften Steuergerät korrespondierende Funktion des Kraftfahrzeugs in Abhängigkeit von dem Eingang des Fehlersignals bei dem fehlerfreien Steuergerät oder dem dritten Steuergerät kontrolliert.

Grundsätzlich sind die erste durch ein erstes Steuergerät und die zweite durch ein zweites Steuergerät kontrollierte Funktion des Kraftfahrzeugs in weiten geeigneten Grenzen frei wählbar. Eine besonders vorteilhafte Weiterbildung sieht jedoch vor, dass die erste Funktion des Kraftfahrzeugs als Bremsfunktion des Kraftfahrzeugs und die zweite Funktion des Kraftfahrzeugs als Lenkfunktion des Kraftfahrzeugs ausgebildet ist. Hierbei handelt es sich um zentrale und sicherheitsrelevante Funktionen des Kraftfahrzeugs, deren ordnungsgemäße Ausführung besonders bei hochautomatisierten oder autonomen Kraftfahrzeugen von entscheidender Bedeutung ist.

Hochautomatisierte oder autonome Kraftfahrzeuge sind Kraftfahrzeuge, bei denen der Fahrzeugführer, wenn überhaupt, lediglich noch eine gewisse Kontrollaufgabe wahrnimmt. Hochautomatisierte oder autonome Kraftfahrzeuge sind also dazu konstruiert und eingerichtet, um im Wesentlichen unabhängig von dem Eingreifen eines Fahrzeugführers am Straßenverkehr teilzunehmen. Der Fahrzeugführer ist mehr ein Passagier als ein die Funktionen des Kraftfahrzeugs bestimmender Entscheider.

Jedoch ist der Begriff "autonom" weit auszulegen, so dass verschiedene Grade von autonomen Fahren und autonomen Kraftfahrzeugen davon umfasst sind. Beispielsweise sei hier ein situationsbedingtes autonomes Fahren und damit situationsbedingt autonom fahrende Kraftfahrzeuge genannt, bei denen je nach Verkehrssituation und/oder durchzuführendem Fahrmanöver ein autonomes Fahren erfolgt oder auch nicht. Entsprechend kann alternativ auch von automatisiertem Fahren und automatisierten Kraftfahrzeugen gesprochen werden.

Analoges gilt für die vorteilhafte Weiterbildung des erfindungsgemäßen Verfahrens, wonach die erste Funktion des Kraftfahrzeugs als Bremsfunktion des Kraftfahrzeugs und die zweite Funktion des Kraftfahrzeugs als Lenkfunktion des Kraftfahrzeugs ausgebildet ist.

Eine andere vorteilhafte Weiterbildung des erfindungsgemäßen Verfahrens sieht vor, dass das fehlerfreie Steuergerät derart konfiguriert wird, dass es die zu dem fehlerhaften Steuergerät korrespondierende Funktion des Kraftfahrzeugs in einer im Vergleich zu einem Normalbetrieb dieser Funktion eingeschränkten Weise oder dass es die zu dem fehlerfreien Steuergerät korrespondierende Funktion des Kraftfahrzeugs in einer im Vergleich zu einem Normalbetrieb dieser Funktion eingeschränkten Weise betreibt. Auf diese Weise ist der Aufwand bei der Realisierung des erfindungsgemäßen Verfahrens reduziert.

Anhand der beigefügten, grob schematischen Zeichnung wird die Erfindung nachfolgend näher erläutert. Dabei zeigen:
- Fig. 1: ein erstes Ausführungsbeispiel eines erfindungsgemäßen Kontrollsystems für ein Kraftfahrzeug und
- Fig. 2: ein zweites Ausführungsbeispiel eines erfindungsgemäßen Kontrollsystems für ein Kraftfahrzeug.

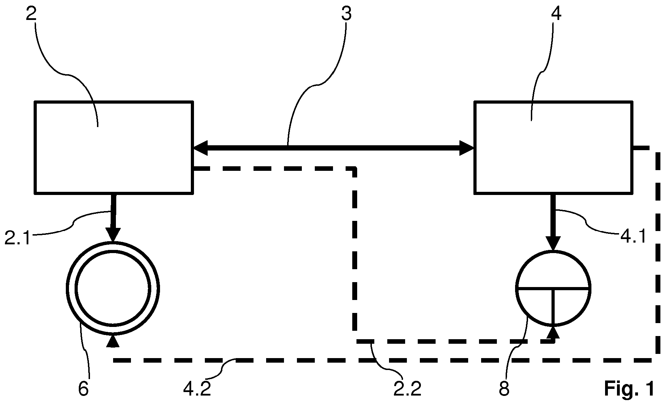

In der Fig. 1 ist ein erstes Ausführungsbeispiel eines erfindungsgemäßen Kontrollsystems für ein Kraftfahrzeug exemplarisch gezeigt. Das Kontrollsystem weist ein erstes Steuergerät 2 für eine erste Funktion und ein zweites Steuergerät 4 für eine zweite Funktion eines nicht näher dargestellten Kraftfahrzeugs auf. Das Kraftfahrzeug ist dabei als ein hochautomatisiertes Kraftfahrzeug ausgebildet, bei dem die Funktionen des Kraftfahrzeugs im Wesentlichen selbsttätig von dem Kraftfahrzeug ausgewählt und ausgeführt werden.

Die erste Funktion ist als Bremsfunktion und die zweite Funktion ist als Lenkfunktion des Kraftfahrzeugs ausgebildet. Entsprechend kontrolliert das erste Steuergerät 2 die Bremsfunktion des Kraftfahrzeugs und das zweite Steuergerät 4 die Lenkfunktion des Kraftfahrzeugs. Das erste Steuergerät 2 zur Kontrolle der Bremsfunktion des Kraftfahrzeugs ist in Signalübertragungsverbindung mit als Bremsen ausgebildeten ersten Aktoren 6 des Kraftfahrzeugs und das zweite Steuergerät 4 ist in Signalübertragungsverbindung mit einem als eine Lenkung ausgebildeten zweiten Aktor 8 des Kraftfahrzeugs.

In anderen Anwendungsfällen könnte es sich bezüglich der Bremsfunktion und/oder der Lenkfunktion um eine andere Anzahl von Aktoren handeln. Der Fachmann wird je nach Einzelfall die entsprechende Auswahl und Anzahl an Aktoren für die jeweilige Funktion des Kraftfahrzeugs auswählen und festlegen.

Die jeweilige Signalübertragungsverbindung zwischen dem ersten Steuergerät 2 und den Bremsen 6 sowie dem zweiten Steuergerät 4 und der Lenkung 8 ist in der Fig. 1 anhand von durchgezogenen Pfeilen 2.1 und 4.1 symbolisiert. Bei den Bremsen 6 und der Lenkung 8 des Kraftfahrzeugs handelt es sich um sicherheitsrelevante und damit sehr wichtige Funktionen des Kraftfahrzeugs. Dies gilt im verstärkten Maße für das gewählte Ausführungsbeispiel, bei dem es sich ja um ein autonomes Kraftfahrzeug handelt.

Damit auch im Fehlerfall eines der Steuergeräte 2 und 4 die Bremsfunktion und die Lenkfunktion des Kraftfahrzeugs ordnungsgemäß und damit sicher ausgeführt werden können, sind das erste Steuergerät 2 und das zweite Steuergerät 4 miteinander signalübertragend verbunden, was in der Fig. 1 durch den Doppelpfeil 3 symbolisiert ist. Gleichzeitig ist das erste Steuergerät 2 auch in Signalübertragungsverbindung mit der Lenkung 8 und das zweite Steuergerät 4 auch in Signalübertragungsverbindung mit den Bremsen 6. Dies ist durch die gestrichelten Pfeile 2.2 und 4.2 symbolisiert.

Im Nachfolgenden wird das erfindungsgemäße Verfahren anhand der Fig. 1 näher erläutert.

Im Normalbetrieb des erfindungsgemäßen Kontrollsystems für das autonome Kraftfahrzeug werden die Bremsen 6 mittels des ersten Steuergeräts 2 für die Bremsfunktion des Kraftfahrzeugs und die Lenkung 8 mittels des zweiten Steuergeräts 4 für die Lenkfunktion des Kraftfahrzeugs angesteuert. Die Notwendigkeit eines Bremseingriffes durch das erste Steuergerät 2 oder eines Lenkeingriffes durch das zweite Steuergerät 4 wird in dem ersten Steuergerät 2 oder in dem zweiten Steuergerät 4 oder in einem zu dem jeweiligen Steuergerät 2, 4 übergeordneten Steuergerät auf dem Fachmann bekannte Weise anhand von an dem entsprechenden Steuergerät anliegenden Eingangssignalen von Sensoren des Kraftfahrzeugs entschieden. Sowohl ein etwaiges übergeordnetes Steuergerät wie auch die Sensoren des Kraftfahrzeugs sind in der Fig. 1 nicht dargestellt.

In dem oben beschriebenen Normalbetrieb des erfindungsgemäßen Kontrollsystems gemäß dem vorliegenden Ausführungsbeispiel greifen das erste Steuergerät 2 nicht in die Lenkfunktion und das zweite Steuergerät 4 nicht in die Bremsfunktion des Kraftfahrzeugs ein. Mittels der zwischen dem ersten Steuergerät 2 und dem zweiten Steuergerät 4 existierenden Signalübertragungsverbindung 3 überwacht das erste Steuergerät 2 die ordnungsgemäße Funktion des zweiten Steuergeräts 4 und das zweite Steuergerät 4 die ordnungsgemäße Funktion des ersten Steuergeräts 2. Im Fehlerfall eines der beiden Steuergeräte 2 und 4 liegt an dem jeweils fehlerfreien Steuergerät 2, 4 ein entsprechendes Fehlersignal von dem fehlerhaften Steuergerät 2 oder 4 als Eingangssignal an.

Sollte beispielsweise das erste Steuergerät 2 fehlerhaft arbeiten, so dass die damit kontrollierten Bremsen 6 nicht mehr ordnungsgemäß kontrolliert werden und somit die Bremsfunktion des Kraftfahrzeugs nicht mehr sicher ausgeführt würde, so wird dieser Fehler mittels der Signalübertragungsverbindung 3 an das zweite Steuergerät 4 gemeldet, woraufhin das zweite Steuergerät 4 derart konfiguriert wird, dass dieses die Bremsfunktion des Kraftfahrzeugs kontrolliert; also die zu dem fehlerhaften ersten Steuergerät 2 korrespondierende Funktion des Kraftfahrzeugs kontrolliert. Hierzu steht das zweite Steuergerät 4 mittels der Signalübertragungsverbindung 4.2 mit den Bremsen 6 des Kraftfahrzeugs in Signalaustausch. Die Bremsen 6 werden somit im Fehlerfall des ersten Steuergeräts 2 nicht mehr von dem ersten Steuergerät 2, sondern von dem zweiten Steuergerät 4 kontrolliert.

Analoges gilt, falls das zweite Steuergerät 4 fehlerhaft arbeitet. In diesem Fall erhält das erste Steuergerät 2 mittels der Signalübertragungsverbindung 3 eine entsprechende Fehlermeldung bezüglich des zweiten Steuergeräts 4, woraufhin das erste Steuergerät 2 derart konfiguriert wird, dass dieses die Lenkfunktion des Kraftfahrzeugs kontrolliert. Die Lenkung 8 wird somit nicht mehr von dem fehlerhaften zweiten Steuergerät 4, sondern von dem ersten Steuergerät 2 kontrolliert, und zwar mittels der Signalübertragungsverbindung 2.2.

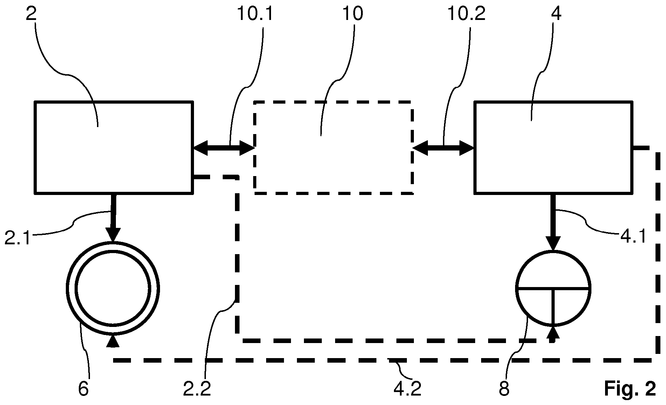

Fig. 2 zeigt ein zweites Ausführungsbeispiel. Im Nachfolgenden werden lediglich die Unterschiede zu dem ersten Ausführungsbeispiel erläutert. Ansonsten wird auf die Beschreibung des ersten Ausführungsbeispiels verwiesen. Gleiche oder gleichwirkende Bauteile sind mit gleichen Bezugszeichen versehen.

Im Unterschied zu dem ersten Ausführungsbeispiel weist das zweite Ausführungsbeispiel neben dem ersten und dem zweiten Steuergerät 2, 4 ein drittes Steuergerät 10 auf. Das dritte Steuergerät 10 ist als ein Zentralsteuergerät 10 des nicht dargestellten Kraftfahrzeugs ausgebildet. Das Zentralsteuergerät 10 steht sowohl mit dem ersten Steuergerät 2 wie auch mit dem zweiten Steuergerät 4 in Signalübertragungsverbindung. In Fig. 2 ist die Signalübertragungsverbindung zwischen dem Zentralsteuergerät 10 und dem ersten Steuergerät 2 durch einen Doppelpfeil 10.1 und die Signalübertragungsverbindung zwischen dem Zentralsteuergerät 10 und dem zweiten Steuergerät 4 durch einen Doppelpfeil 10.2 symbolisiert.

Mittels der Signalübertragungsverbindungen 10.1 und 10.2 überwacht das Zentralsteuergerät 10 die ordnungsgemäße Funktion des ersten Steuergeräts 2 und die ordnungsgemäße Funktion des zweiten Steuergeräts 4. Im Fehlerfall eines der beiden Steuergeräte 2 und 4 liegt an dem Zentralsteuergerät 10 ein entsprechendes Fehlersignal von dem fehlerhaften Steuergerät 2 oder 4 als Eingangssignal an.

Sollte beispielsweise das erste Steuergerät 2 fehlerhaft arbeiten, so dass die damit kontrollierten Bremsen 6 nicht mehr ordnungsgemäß kontrolliert werden und somit die Bremsfunktion des Kraftfahrzeugs nicht mehr sicher ausgeführt würde, so wird dieser Fehler mittels der Signalübertragungsverbindung 10.1 an das Zentralsteuergerät 10 gemeldet, woraufhin das mittels der Signalübertragungsverbindung 10.2 mit dem Zentralsteuergerät 10 in Signalaustausch stehende zweite Steuergerät 4 derart konfiguriert wird, dass dieses die Bremsfunktion des Kraftfahrzeugs kontrolliert; also die zu dem fehlerhaften ersten Steuergerät 2 korrespondierende Funktion des Kraftfahrzeugs kontrolliert. Hierzu steht das zweite Steuergerät 4 mittels der Signalübertragungsverbindung 4.2 mit den Bremsen 6 des Kraftfahrzeugs in Signalaustausch. Die Bremsen 6 werden somit im Fehlerfall des ersten Steuergeräts 2 nicht mehr von dem ersten Steuergerät 2, sondern von dem zweiten Steuergerät 4 kontrolliert.

Analoges gilt, falls das zweite Steuergerät 4 fehlerhaft arbeitet. In diesem Fall erhält das Zentralsteuergerät 10 mittels der Signalübertragungsverbindung 10.2 eine entsprechende Fehlermeldung bezüglich des zweiten Steuergeräts 4, woraufhin das mittels der Signalübertragungsverbindung 10.1 mit dem Zentralsteuergerät 10 in Signalaustausch stehende erste Steuergerät 2 derart konfiguriert wird, dass dieses die Lenkfunktion des Kraftfahrzeugs kontrolliert. Die Lenkung 8 wird somit nicht mehr von dem fehlerhaften zweiten Steuergerät 4, sondern von dem ersten Steuergerät 2 kontrolliert, und zwar mittels der Signalübertragungsverbindung 2.2.

Bei den vorliegenden Ausführungsbeispielen weist das Kontrollsystem jeweils eine nicht dargestellte Bedienungsschnittstelle auf und ist in Abhängigkeit des Anliegens eines Aktivierungssignals an der Bedienungsschnittstelle von einem Deaktivierungszustand in einen Aktivierungszustand überführbar, wobei das fehlerfreie Steuergerät 4 oder 2 in dem Deaktivierungszustand des Kontrollsystems die zu dem fehlerhaften Steuergerät 2 oder 4 korrespondierende Funktion des Kraftfahrzeugs unabhängig von dem Eingang des Fehlersignals bei dem fehlerfreien Steuergerät 4 oder 2 oder dem dritten Steuergerät 10 nicht kontrolliert und in dem Aktivierungszustand des Kontrollsystems die zu dem fehlerhaften Steuergerät 2 oder 4 korrespondierende Funktion des Kraftfahrzeugs in Abhängigkeit von dem Eingang des Fehlersignals bei dem fehlerfreien Steuergerät 4 oder 2 oder dem dritten Steuergerät 10 kontrolliert.

Das erfindungsgemäße Kontrollsystem für ein Kraftfahrzeug gemäß den vorliegenden Ausführungsbeispielen ist in einem Kraftfahrzeug vorhanden und deaktiviert und könnte für eine zukünftige Verwendung mittels eines Bedieneingriffs eines Fahrzeugführers, von Werkstattpersonal oder dergleichen, aktiviert werden. Analoges gilt für das erfindungsgemäße Verfahren gemäß den vorliegenden Ausführungsbeispielen zur Kontrolle eines Kraftfahrzeugs.

Dies ist auch deshalb vorteilhaft, da es möglich sein kann, dass autonome Kraftfahrzeuge in manchen Staaten rechtlich noch nicht zugelassen sind. Bei einer späteren Änderung der Gesetzeslage kann dann das gemäß der Erfindung vorbereitete Kraftfahrzeug mit geringem Aufwand auf einen autonomen Fahrbetrieb und damit auf die Verwendung eines erfindungsgemäßen Kontrollsystems sowie auf die Verwendung eines erfindungsgemäßen Verfahrens zur Kontrolle des Kraftfahrzeugs in deren Aktivierungszustand umgestellt werden.

Die Erfindung ist nicht auf die vorliegenden Ausführungsbeispiele begrenzt.

Beispielsweise wäre es denkbar, dass das fehlerfreie Steuergerät im Normalbetrieb des Kraftfahrzeugs eine eher untergeordnete Funktion des Kraftfahrzeugs kontrolliert. Sollte es dann zu einem Fehlerfall kommen, so könnte das fehlerfreie Steuergerät derart konfiguriert werden, dass es anstelle der untergeordneten Funktion im Fehlerfall die Funktion des fehlerhaften Steuergeräts kontrolliert. Dabei könnte es sich, wie in dem Ausführungsbeispiel, um die Bremsfunktion oder die Lenkfunktion des Kraftfahrzeugs handeln.

In anderen Ausgestaltungen der Erfindung, beispielsweise bei gleichrangigen Funktionen des Kraftfahrzeugs, wäre es jedoch auch denkbar, dass das fehlerfreie Steuergerät die zu dem fehlerhaften Steuergerät korrespondierende Funktion zusätzlich zu der zu dem fehlerfreien Steuergerät in dessen Normalbetrieb korrespondierenden Funktion kontrolliert.

Ferner könnte das fehlerfreie Steuergerät die Funktion des fehlerhaften Steuergeräts in einer Art Notbetrieb kontrollieren. Auch der umgekehrte Fall ist grundsätzlich denkbar, nämlich dass das fehlerfreie Steuergerät die diesem Steuergerät in dessen Normalbetrieb zugeordnete Funktion in einem Fehlerfall zugunsten der Funktion des fehlerhaften Steuergeräts in einer Art Notbetrieb kontrolliert.

Die Erfindung ist nicht auf die Bremsfunktion und Lenkfunktion eines Kraftfahrzeugs beschränkt. Auch bei anderen Funktionen eines Kraftfahrzeugs ist die Erfindung vorteilhaft anwendbar.

### Bezugszeichenliste

2 Erstes Steuergerät, zur Kontrolle der Bremsfunktion ausgebildet
2.1 Signalübertragungsverbindung zwischen dem ersten Steuergerät 2 und den Bremsen 6
2.2 Signalübertragungsverbindung zwischen dem ersten Steuergerät 2 und der Lenkung 8
3 Signalübertragungsverbindung zwischen dem ersten Steuergerät 2 und dem zweiten Steuergerät 4
4 Zweites Steuergerät, zur Kontrolle der Lenkfunktion ausgebildet
4.1 Signalübertragungsverbindung zwischen dem zweiten Steuergerät 4 und der Lenkung 8
4.2 Signalübertragungsverbindung zwischen dem zweiten Steuergerät 4 und den Bremsen 6
6 Erste Aktoren, als Bremsen ausgebildet
8 Zweiter Aktor, als Lenkung ausgebildet
10 Drittes Steuergerät, als Zentralsteuergerät ausgebildet
10.1 Signalübertragungsverbindung zwischen dem ersten Steuergerät 2 und dem dritten Steuergerät 10
10.2 Signalübertragungsverbindung zwischen dem zweiten Steuergerät 4 und dem dritten Steuergerät 10

## Patentansprüche

1. Kontrollsystem für ein Kraftfahrzeug, mit einem ersten Steuergerät (2) zur Kontrolle einer ersten Funktion des Kraftfahrzeugs und einem zweiten Steuergerät (4) zur Kontrolle einer zweiten Funktion des Kraftfahrzeugs, wobei das erste und das zweite Steuergerät (2, 4) jeweils mit mindestens einem Sensor und/oder mindestens einem Aktor (6, 8) signalübertragend verbunden sind, und wobei das erste Steuergerät (2) und das zweite Steuergerät (4) signalübertragend verbunden sind oder das erste und das zweite Steuergerät (2, 4) jeweils mit einem dritten Steuergerät (10) signalübertragend verbunden sind und in Abhängigkeit des Eingangs eines Fehlersignals von dem ersten Steuergerät (2) oder dem zweiten Steuergerät (4) bei dem jeweils fehlerfreien Steuergerät (2; 4) oder dem dritten Steuergerät (10) das jeweils fehlerfreie Steuergerät (2; 4) derart konfigurierbar ist, dass mittels des fehlerfreien Steuergeräts (2; 4) die zu dem fehlerhaften Steuergerät (4; 2) korrespondierende Funktion des Kraftfahrzeugs kontrollierbar ist, wobei das fehlerfreie Steuergerät (2; 4) signalübertragend mit dem zu dem fehlerhaften Steuergerät (4; 2) korrespondierenden mindestens einen Sensor und/oder mindestens einen Aktor (8; 6) verbindbar ist,
**dadurch gekennzeichnet,**
**dass** das Kontrollsystem eine Bedienungsschnittstelle aufweist und in Abhängigkeit des Anliegens eines Aktivierungssignals an der Bedienungsschnittstelle von einem Deaktivierungszustand in einen Aktivierungszustand überführbar ist, wobei das fehlerfreie Steuergerät (2; 4) in dem Deaktivierungszustand des Kontrollsystems die zu dem fehlerhaften Steuergerät (4; 2) korrespondierende Funktion des Kraftfahrzeugs unabhängig von dem Eingang des Fehlersignals bei dem fehlerfreien Steuergerät (2; 4) oder dem dritten Steuergerät (10) nicht kontrolliert und in dem Aktivierungszustand des Kontrollsystems die zu dem fehlerhaften Steuergerät (4; 2) korrespondierende Funktion des Kraftfahrzeugs in Abhängigkeit von dem Eingang des Fehlersignals bei dem fehlerfreien Steuergerät (2; 4) oder dem dritten Steuergerät (10) kontrolliert.

2. Kontrollsystem nach Anspruch 1,
**dadurch gekennzeichnet,**
**dass** die erste Funktion des Kraftfahrzeugs als Bremsfunktion und die zweite Funktion des Kraftfahrzeugs als Lenkfunktion ausgebildet ist.

3. Kraftfahrzeug, umfassend ein Kontrollsystem mit einem ersten Steuergerät (2) zur Kontrolle einer ersten Funktion des Kraftfahrzeugs und einem zweiten Steuergerät (4) zur Kontrolle einer zweiten Funktion des Kraftfahrzeugs, wobei das erste und das zweite Steuergerät (2, 4) jeweils mit mindestens einem Sensor und/oder mindestens einem Aktor verbunden sind,
**dadurch gekennzeichnet,**
**dass** das Kontrollsystem nach einem der Ansprüche 1 oder 2 ausgebildet ist.

4. Verfahren zur Kontrolle eines Kraftfahrzeugs, wobei das Kraftfahrzeug ein erstes Steuergerät (2) zur Kontrolle einer ersten Funktion des Kraftfahrzeugs und ein zweites Steuergerät (4) zur Kontrolle einer zweiten Funktion des Kraftfahrzeugs aufweist, wobei das erste und das zweite Steuergerät (2, 4) jeweils mit mindestens einem Sensor und/oder mindestens einem Aktor (6, 8) signalübertragend verbunden sind, und wobei das erste Steuergerät (2) und das zweite Steuergerät (4) signalübertragend verbunden sind oder das erste und das zweite Steuergerät (2, 4) jeweils mit einem dritten Steuergerät (10) signalübertragend verbunden sind und in Abhängigkeit des Eingangs eines Fehlersignals von dem ersten Steuergerät (2) oder dem zweiten Steuergerät (4) bei dem jeweils fehlerfreien Steuergerät (2; 4) oder dem dritten Steuergerät (10) das jeweils fehlerfreie Steuergerät (2; 4) derart konfiguriert wird, dass es die zu dem fehlerhaften Steuergerät (4; 2) korrespondierende Funktion des Kraftfahrzeugs kontrolliert, wobei das fehlerfreie Steuergerät (2; 4) signalübertragend mit dem zu dem fehlerhaften Steuergerät (4; 2) korrespondierenden mindestens einen Sensor und/oder mindestens einen Aktor (8; 6) verbunden wird,
**dadurch gekennzeichnet,**
**dass** das Kontrollsystem eine Bedienungsschnittstelle aufweist und in Abhängigkeit des Anliegens eines Aktivierungssignals an der Bedienungsschnittstelle von einem Deaktivierungszustand in einen Aktivierungszustand überführt wird, wobei das fehlerfreie Steuergerät (2; 4) in dem Deaktivierungszustand des Kontrollsystems die zu dem fehlerhaften Steuergerät (4; 2) korrespondierende Funktion des Kraftfahrzeugs unabhängig von dem Eingang des Fehlersignals bei dem fehlerfreien Steuergerät (2; 4) oder dem dritten Steuergerät (10) nicht kontrolliert und in dem Aktivierungszustand des Kontrollsystems die zu dem fehlerhaften Steuergerät (4; 2) korrespondierende Funktion des Kraftfahrzeugs in Abhängigkeit von dem Eingang des Fehlersignals bei dem fehlerfreien Steuergerät (2; 4) oder dem dritten Steuergerät (10) kontrolliert.

5. Verfahren nach Anspruch 4,
**dadurch gekennzeichnet,**
**dass** das fehlerfreie Steuergerät derart konfiguriert wird, dass es die zu dem fehlerhaften Steuergerät korrespondierende Funktion des Kraftfahrzeugs in einer im Vergleich zu einem Normalbetrieb dieser Funktion eingeschränkten Weise oder dass es die zu dem fehlerfreien Steuergerät korrespondierende Funktion des Kraftfahrzeugs in einer im Vergleich zu einem Normalbetrieb dieser Funktion eingeschränkten Weise betreibt.

6. Verfahren nach Anspruch 4 oder 5,
**dadurch gekennzeichnet,**
**dass** die erste Funktion des Kraftfahrzeugs als Bremsfunktion und die zweite Funktion des Kraftfahrzeugs als Lenkfunktion ausgebildet ist.

7. Computerprogrammprodukt, umfassend Befehle, die bewirken, dass das Kontrollsystem nach einem der Ansprüche 1 oder 2 die Verfahrensschritte des Verfahrens nach einem der Ansprüche 4 bis 6 ausführt.

8. Computerlesbares Medium, auf dem das Computerprogrammprodukt nach Anspruch 7 gespeichert ist.

## Claims

1. Control system for a motor vehicle, having a first control unit (2) for controlling a first function of the motor vehicle and a second control unit (4) for controlling a second function of the motor vehicle, the first and second control units (2, 4) each being connected in a signal-transmitting manner to at least one sensor and/or at least one actuator (6, 8), and wherein the first control unit (2) and the second control unit (4) are connected in a signal-transmitting manner or the first and the second control units (2, 4) are each connected in a signal-transmitting manner to a third control unit (10) and, depending on the input of an error signal from the first control unit (2) or the second control unit (4) at the respective error-free control unit (2; 4) or the third control unit (10), the respective fault-free control unit (2; 4) can be configured in such a way that the function of the motor vehicle corresponding to the faulty control unit (4; 2) can be controlled by means of the fault-free control unit (2; 4), wherein the fault-free control unit (2; 4) can be connected in a signal-transmitting manner to the at least one sensor and/or at least one actuator (8; 6) corresponding to the faulty control unit (4; 2), **characterized in that**
the control system features an operating interface and can be transferred from a deactivation state to an activation state depending on the presence of an activation signal at the operating interface, wherein the fault-free control unit (2; 4) in the deactivation state does not control the function of the motor vehicle corresponding to the faulty control unit (4; 2) irrespective of the input of the error signal at the fault-free control unit (2; 4) or the third control unit (10) and, in the activation state of the control system, controls the function of the motor vehicle corresponding to the faulty control unit (4; 2) depending on the input of the error signal at the fault-free control unit (2; 4) or the third control unit (10).

2. Control system in accordance with claim 1,
**characterized in that**
the first function of the motor vehicle is designed as a braking function and the second function of the motor vehicle is designed as a steering function.

3. Motor vehicle, comprising a control system with a first control unit (2) for controlling a first function of the motor vehicle and a second control unit (4) for controlling a second function of the motor vehicle, wherein the first and second control units (2, 4) are each connected to at least one sensor and/or at least one actuator,
**characterized in that**
the control system is designed in accordance with one of claims 1 or 2.

4. Method for controlling a motor vehicle, wherein the motor vehicle features a first control unit (2) for controlling a first function of the motor vehicle and a second control unit (4) for controlling a second function of the motor vehicle, wherein the first and second control units (2, 4) are each connected in a signal-transmitting manner to at least one sensor and/or at least one actuator (6, 8), and wherein the first control unit (2) and the second control units (4) are connected in a signal-transmitting manner or the first and the second control units (2, 4) are each connected in a signal-transmitting manner to a third control unit (10) and, depending on the input of an error signal from the first control unit (2) or the second control unit (4) at the respective error-free control unit (2; 4) or the third control unit (10), the respective fault-free control unit (2; 4) is configured in such a way that it controls the function of the motor vehicle corresponding to the faulty control unit (4; 2), wherein the fault-free control unit (2; 4) is connected in a signal-transmitting manner to the at least one sensor and/or at least one actuator (8; 6) corresponding to the faulty control unit (4; 2),
**characterized in that**
the control system features an operating interface and is transferred from a deactivation state to an activation state depending on the presence of an activation signal at the operating interface, wherein the fault-free control unit (2; 4) in the deactivation state of the control system does not control the function of the motor vehicle corresponding to the faulty control unit (4; 2) irrespective of the input of the error signal at the fault-free control unit (2; 4) or the third control unit (10) and, in the activation state of the control system, controls the function of the motor vehicle corresponding to the faulty control unit (4; 2) depending on the input of the error signal at the fault-free control unit (2; 4) or the third control unit (10).

5. Procedure in accordance with claim 4,
**characterized in that**
the fault-free control unit is configured in such a way that it operates the function of the motor vehicle corresponding to the faulty control unit in a restricted manner in comparison with a normal operation of this function, or in such a way that it operates the function of the motor vehicle corresponding to the fault-free control unit in a restricted manner in comparison with a normal operation of this function.

6. Procedure in accordance with claim 4 or 5,
**characterized in that**
the first function of the motor vehicle is designed as a braking function and the second function of the motor vehicle is designed as a steering function.

7. Computer program product comprising commands that cause the control system in accordance with one of claims 1 or 2 to perform the steps of the procedure in accordance with one of claims 4 through 6.

8. Machine-readable medium on which the computer program product in accordance with claim 7 is stored.

## Revendications

1. Système de commande pour véhicule automobile comprenant un premier appareil de commande (2) pour la commande d'une première fonction du véhicule automobile et un deuxième appareil de commande (4) pour la commande d'une deuxième fonction du véhicule automobile, le premier et le deuxième appareil de commande (2, 4) étant reliés chacun à au moins un capteur et/ou au moins un actionneur (6, 8) de manière à transmettre des signaux, et le premier appareil de commande (2) et le deuxième appareil de commande (4) étant reliés de manière à transmettre des signaux ou le premier et le deuxième appareil de commande (2, 4) étant reliés chacun à un troisième appareil de commande (10) de manière à transmettre des signaux et, en fonction de l'entrée d'un signal d'erreur du premier appareil de commande (2) ou du deuxième appareil de commande (4), à l'appareil de commande (2 4) sans erreur ou au troisième appareil de commande (10), l'appareil de commande (2 4) sans erreur pouvant être configuré de telle sorte qu'au moyen de l'appareil de commande (2, 4) sans erreur, la fonction du véhicule automobile correspondante de l'appareil de commande (4, 2) présentant l'erreur puisse être contrôlée, l'appareil de commande (2, 4) sans erreur pouvant être relié par transmission de signaux à au moins un capteur et/ou au moins un actionneur (8, 6) correspondant à l'appareil de commande (4, 2) présentant l'erreur, **caractérisé en ce que**
le système de commande présente une interface de commande et peut passer d'un état de désactivation à un état d'activation en fonction de l'application d'un signal d'activation à l'interface de commande, l'appareil de commande sans erreur (2, 4) ne contrôlant pas, à l'état désactivé du système de commande, la fonction du véhicule automobile correspondant à l'appareil de commande en erreur (4, 2) en fonction de l'entrée indépendamment de l'entrée du signal de défaut au niveau de l'appareil de commande sans erreur (2, 4) ou du troisième appareil de commande (10) et contrôlant, à l'état d'activation du système de commande, la fonction du véhicule automobile correspondant à l'appareil de commande en erreur (4, 2) en fonction de l'entrée du signal de défaut au niveau de l'appareil de commande sans erreur (2, 4) ou du troisième appareil de commande (10).

2. Système de commande selon la revendication 1,
**caractérisé en ce que**
la première fonction du véhicule automobile est conçue comme fonction de freinage et la deuxième fonction du véhicule automobile comme fonction de direction.

3. Véhicule automobile, comprenant un système de commande avec un premier appareil de commande (2) pour la commande d'une première fonction du véhicule automobile et un deuxième appareil de commande (4) pour la commande d'une deuxième fonction du véhicule automobile, le premier et le deuxième appareil de commande (2, 4) étant reliés chacun à au moins un capteur et/ou au moins un actionneur,
**caractérisé en ce que**
le système de commande est réalisé selon l'une des revendications 1 ou 2.

4. Procédé de commande d'un véhicule automobile, le véhicule automobile présentant un premier appareil de commande (2) pour la commande d'une première fonction du véhicule automobile et un deuxième appareil de commande (4) pour la commande d'une deuxième fonction du véhicule automobile, le premier et le deuxième appareil de commande (2, 4) étant reliés chacun à au moins un capteur et/ou au moins un actionneur (6, 8) de manière à transmettre des signaux, et le premier appareil de commande (2) et le deuxième appareil de commande (4) étant reliés de manière à transmettre des signaux ou le premier et le deuxième appareil de commande (2, 4) étant reliés chacun à un troisième appareil de commande (10) de manière à transmettre des signaux et, en fonction de l'entrée d'un signal d'erreur du premier appareil de commande (2) ou du deuxième appareil de commande (4), à l'appareil de commande (2 4) sans erreur ou au troisième appareil de commande (10), l'appareil de commande sans erreur (2 4) pouvant être configuré de manière à commander la fonction du véhicule automobile correspondante de l'appareil de commande présentant l'erreur (4, 2), l'appareil de commande sans erreur (2, 4) étant relié par transmission de signaux à au moins un capteur et/ou au moins un actionneur (8, 6) correspondant à l'appareil de commande présentant l'erreur (4,2),
**caractérisé en ce que**
le système de commande présente une interface de commande et passe d'un état de désactivation à un état d'activation en fonction de l'application d'un signal d'activation à l'interface de commande, l'appareil de commande sans erreur (2, 4) ne contrôlant pas, à l'état désactivé du système de commande, la fonction du véhicule automobile correspondant à l'appareil de commande en erreur (4, 2) en fonction de l'entrée indépendamment de l'entrée du signal de défaut au niveau de l'appareil de commande sans erreur (2, 4) ou du troisième appareil de commande (10) et contrôlant, à l'état d'activation du système de commande, la fonction du véhicule automobile correspondant à l'appareil de commande en erreur (4, 2) en fonction de l'entrée du signal de défaut au niveau de l'appareil de commande sans erreur (2, 4) ou du troisième appareil de commande (10).

5. Procédé selon la revendication 4,
**caractérisé en ce que**
l'appareil de commande sans erreur est configuré de telle sorte qu'il exploite la fonction du véhicule automobile correspondant à l'appareil de commande en erreur d'une manière limitée par rapport à un fonctionnement normal de cette fonction ou qu'il exploite la fonction du véhicule automobile correspondant à l'appareil de commande sans erreur d'une manière limitée par rapport à un fonctionnement normal de cette fonction.

6. Procédé selon la revendication 4 ou 5,
**caractérisé en ce que**
la première fonction du véhicule automobile est conçue comme fonction de freinage et la deuxième fonction du véhicule automobile comme fonction de direction.

7. Produit programme informatique comprenant des instructions pour faire en sorte que le système de commande selon l'une des revendications 1 ou 2 exécute les étapes du procédé selon l'une des revendications 4 à 6.

8. Support lisible par ordinateur sur lequel est stocké le produit programme informatique selon la revendication 7.
